# EUROPÄISCHE PATENTSCHRIFT

(11) **EP 1 144 988 B1**
(45) Veröffentlichungstag und Bekanntmachung des Hinweises auf die Patenterteilung: **13.10.2004**
(21) Anmeldenummer: 00901074.5
(22) Anmeldetag: 07.01.2000
(51) Int. Cl.: G01N 23/22

(54) **PRÄZISIONS-PROBENDREHVORRICHTUNG**
DEVICE FOR THE PRECISION ROTATION OF SAMPLES
DISPOSITIF D'ENTRAINEMENT EN ROTATION DE PRECISION POUR ECHANTILLON

(30) Priorität: 07.01.1999 DE 19900346
(43) Veröffentlichungstag der Anmeldung: 17.10.2001
(60) Teilanmeldung: 04016152.3
(73) Patentinhaber: EUROPÄISCHES LABORATORIUM FÜR MOLEKULARBIOLOGIE (EMBL), D-69117 Heidelberg (DE)
(72) Erfinder: CIPRIANI, Florent, F-38640 Claix (FR); CASTAGNA, Jean, Charles, F-38360 Sassenage (FR)
(74) Vertreter: Prechtel, Jörg, Dipl.-Phys. Dr.
(86) Internationale Anmeldenummer: PCT/EP2000/000088
(87) Internationale Veröffentlichungsnummer: WO 2000/040952

(56) Entgegenhaltungen:
- EP-A- 0 223 297
- PATENT ABSTRACTS OF JAPAN vol. 014, no. 169 (P-1032), 30. März 1990 (1990-03-30) & JP 02 025738 A (TOSHIBA CORP), 29. Januar 1990 (1990-01-29)
- PATENT ABSTRACTS OF JAPAN vol. 1999, no. 14, 22. Dezember 1999 (1999-12-22) & JP 11 248651 A (CANON INC), 17. September 1999 (1999-09-17)

## Beschreibung

Die vorliegende Erfindung betrifft eine Präzisions-Probendrehvorrichtung an einem Diffraktometer, insbesondere für Röntgen- bzw. Synchrotronstreuversuche.

Die Streuung von Röntgenstrahlen ist eine seit langer Zeit bekannte und weltweit eingesetzte Methode zur Untersuchung der Struktur kondensierter Materie. Hierbei wird eine zu untersuchende Probe in einen hinsichtlich seiner Wellenlängenverteilung, seiner Abmessungen, seiner Kohärenzeigenschaften und dgl. vorher definierten Röntgenstrahl eingebracht und die Intensitätsverteilung der von der Probe gestreuten Röntgenstrahlung mit Hilfe eines Röntgendetektors untersucht. So kann beispielsweise die statische Kristallstruktur eines Festkörpers durch Messung der Lage und der Intensität der von ihm bei einer genau zu bestimmenden Orientierung relativ zum einfallenden Röntgenstrahl in ebenfalls genau zu bestimmende Ausfallsrichtungen elastisch gestreuten Braggsignale aufgeklärt werden.

Zur Durchführung derartiger Streuversuche an Röntgenstrahlapparaturen oder vorzugsweise an modernen Synchrotronstrahlungsquellen, welche besonders energiereiche Röntgenstrahlen liefern können, ist die Probe in der Regel von einem Probenhalter gehalten, der an einem Diffraktometer befestigt ist. Ein derartiges Diffraktometer umfaßt in der Regel mehrere Linearverschiebe- und Probendrehvorrichtungen, welche motorisch antreibbar sind und somit eine Justage der Probe und ein Drehen der Probe im Strahl, beispielsweise bei der Suche nach Braggsignalen, in einer für die Experimentatoren beim Meßbetrieb aus Sicherheitsgründen in der Regel nicht zugänglichen Meßkabine erlauben. Zur Durchführung der Messungen ist es wichtig, daß die Probe möglichst exakt zentrisch zur Drehachse der Drehwelle im Strahl angeordnet ist. Andernfalls kann nämlich bei einer Drehung der Drehwelle eine zusätzliche Verschiebung der Probe im Strahl auftreten. Gerade bei biologischen Proben, die häufig nur mit Abmessungen in der Größenordnung von 1 µm hergestellt werden können und zu deren Untersuchung Röntgen- bzw. Synchrotronstrahlen mit entsprechend kleinen Abmessungen quer zur Ausbreitungsrichtung eingesetzt werden, ist eine solche Zentrierung wichtig, da die Probe andernfalls bei einer Drehung der Drehwelle sogar aus dem Strahl herausgedreht werden kann.

Es ist aus diesem Grund beim Aufbau von Diffraktometern allgemein bekannt, auf der Probendrehvorrichtung eine zusätzliche, häufig als XY-Tisch bezeichnete Verschiebevorrichtung zu befestigen, die aus zwei orthogonal zueinander in der Regel motorisiert verschiebbaren Linearverschiebeeinheiten besteht. Durch in der Regel iteratives Justieren dieser beiden Linearverschiebeeinheiten kann die Probe im wesentlichen zentrisch zur Drehachse positioniert werden.

Eine derart gestaltete Probendrehvorrichtung weist jedoch bei der Untersuchung der oben genannten biologischen Proben mit typischen Abmessungen in der Größenordnung von 1 µm Nachteile auf. So sind z.B. die Motoren, welche derartige Linearverschiebeeinheiten antreiben, mit Kabeln versehen, welche bei jedem Drehen oder Verschieben der Probe eine Zugspannung auf das probenseitige Ende der Drehwelle ausüben. Dies kann dazu führen, daß die Welle am probenseitigen Ende gebogen wird oder daß die gesamte, ein gewisses Spiel aufweisende Welle verschoben wird, so daß die Probe aus der Drehachse und/oder aus dem Strahl hinausläuft. Darüber hinaus behindern die mit der Probendrehvorrichtung mitgedrehten Motorkabel der Linearverschiebeeinheiten die freie Drehbarkeit der Probendrehvorrichtung und können sogar versehentlich abgerissen werden, wenn sie sich beim Drehen der Probe um die Probendrehvorrichtung wickeln. Verzichtet man zur Vermeidung von Kabeln auf den Motorantrieb der Verschiebeeinheiten des XY-Tischs und verstellt diese stattdessen manuell, so steigt insbesondere bei Synchrotronstrahlplätzen der Zeitbedarf für die Probenjustage aufgrund der Sicherheitsvorschriften beim Betreten und Verlassen der Meßkabine stark an. Ferner tritt auch bei manuell verstellbaren Verschiebeeinheiten das Problem auf, daß ihr Gewicht die Drehwelle belastet, insbesondere bei horizontal gelagerten Drehwellen, was ebenfalls zu der oben beschriebenen Durchbiegung oder Verlagerung der Drehwelle führen kann.

Es ist daher Aufgabe der Erfindung, eine Probendrehvorrichtung an einem derartigen Diffraktometervorzuschlagen, welche eine einfache, schnelle und während des Meßbetriebs dauerhafte Positionierung der Probe im Strahl ermöglicht.

Erfindungsgemäß wird diese Aufgabe durch eine Präzisions-Probendrehvorrichtung an einem Diffraktometer, insbesondere für Röntgen- bzw. Synchrotronstreuversuche, gelöst, gemäß Anspruch 1.

Um die Probe im wesentlichen zentrisch zur Drehachse zu positionieren, ist das Zentrierelement, an welchem der die Probe haltende Probenhalter befestigt bzw. mit welchem er einstückig gebildet ist, an dem hierfür vorgesehenen Ende der motorisch antreibbaren Drehwelle angebracht. Hierbei wird die Probe in der Regel noch nicht zentrisch zur Drehachse der Drehwelle angeordnet sein. Man erkennt dies daran, daß die Probe bzw. ihr Mittelpunkt bei einer Drehung der Drehwelle nicht ortsfest bleibt. Vielmehr wird die Probe bei einer Drehung der Drehwelle um 360° eine Kreisbahn durchlaufen. Der Mittelpunkt dieser Kreisbahn kennzeichnet die Drehachse der Drehwelle. Mit Hilfe des Mikrometerfingers kann nun das Zentrierelement gegenüber der Drehwelle so weit verschoben werden, daß die Probe im Mittelpunkt der vorher beobachteten Kreisbahn und somit zentrisch zur Drehachse liegt.

In der Praxis geht man hierzu beispielsweise wie folgt vor: Nach dem Anbringen des Zentrierelements an der Drehwelle dreht man diese um 360° und mißt den Radius r der hierbei von der Probe beschriebenen Kreisbahn. Anschließend dreht man die Drehwelle in eine Drehstellung, bei der die Orientierung der Probe relativ zum Mittelpunkt der Kreisbahn der Orientierung des Mikrometerfingers relativ zum Zentrierelement entspricht. Ist beispielsweise der Mikrometerfinger im Laborsystem über dem Zentrierelement angeordnet, so dreht man die Drehwelle in eine Stellung, bei der die Probe über dem Mittelpunkt der Kreisbahn angeordnet ist. Anschließend verlagert man den Mikrometerfinger, im genannten Beispiel nach unten, so weit, bis die Probe zentrisch zum Mittelpunkt des Kreises und somit zur Drehachse angeordnet ist. Nach einer derartigen Positionierung der Probe kann der Mikrometerfinger durch seine Antriebsvorrichtung ggf. wieder zurückgezogen werden, um die freie Drehung der Drehwelle nicht zu behindern. Da im Gegensatz zu herkömmlichen Diffraktometern bei der erfindungsgemäßen Präzisions-Probendrehvorrichtung keine schweren, in der Regel motorisierten Verschiebevorrichtungen an der Drehwelle angebracht sind, sondern stattdessen nur ein Zentrierelement, welches im wesentlichen als Scheibe ausgebildet sein kann und welches durch den außerhalb der Drehwelle angeordneten Mikrometerfinger verschoben werden kann, ist die Drehwelle frei von Zugspannungen und im wesentlichen frei von Gewichtsbelastungen, so daß die Probe dauerhaft mikrometergenau zentrisch zur Drehachse positioniert werden kann.

Um beim Beginn des Verschiebens des Zentrierelements relativ zur Drehwelle mit Hilfe des anfänglich zurückgezogenen, orthogonal zur Drehachse positionierbaren Mikrometerfingers ein möglichst sanftes Aufsetzen dieses Mikrometerfingers auf dem Zentrierelement zu ermöglichen, kann eine Erfassungseinrichtung für den momentanen lichten Abstand, ggf. Null-Abstand, zwischen dem Mikrometerfinger und dem Zentrierelement vorgesehen sein. Man kann dann die Geschwindigkeit der Mikrometerfinger-Antriebsvorrichtung nach Maßgabe des von der Erfassungseinrichtung erfaßten momentanen lichten Abstands zwischen dem Mikrometerfinger und dem Zentrierelement steuern. Zweckmäßigerweise wird man diese Steuerung derart vornehmen, daß die Geschwindigkeit der Mikrometerfinger-Antriebsvorrichtung mit abnehmendem lichtem Abstand verringert wird.

In einer einfach zu realisierenden Ausführungsform ist vorgesehen, daß die Erfassungsvorrichtung einen an dem dem Zentrierelement zugewandten Ende des Mikrometerfingers angeordneten Kapazitätssensor umfaßt. Derartige Kapazitätssensoren sind in der Metrologie bekannt und erlauben die Bestimmung eines Abstands zwischen zwei eine elektrische Kapazität bildenden Komponenten mit einer Auflösung von in der Regel weniger als 1 µm. Nach Maßgabe des derart erfaßten lichten Abstands kann man die Geschwindigkeit der Mikrometerfinger-Antriebsvorrichtung bis zum Erreichen des Null-Abstands, d.h. des Kontakts zwischen dem Mikrometerfinger und dem Zentrierelement, kontinuierlich verringern, oder die Mikrometerfinger-Antriebsvorrichtung kann den Mikrometerfinger bis zum Erreichen eines Sicherheitsabstands, beispielsweise in der Größenordnung von 10 µm, bei einer ersten hohen Geschwindigkeit auf das Zentrierelement zubewegen und bei Unterschreiten dieses Sicherheitsabstands auf eine zweite, kleinere Geschwindigkeit umschalten, bis der Null-Abstand erreicht ist.

Um das Zentrierelement mit Hilfe des Mikrometerfingers in einer zur Drehachse der Drehwelle orthogonalen Ebene verschieben zu können, ist bevorzugt vorgesehen, daß das Zentrierelement an der Drehwelle magnetisch gehalten ist. Die hierzu erforderliche magnetische Kraft zwischen dem Zentrierelement und der Drehwelle kann in einfacher Weise dadurch bewirkt werden, daß ein oder mehrere Permanentmagneten in das Ende der Drehwelle oder in das Zentrierelement eingelassen sind und das jeweils andere Teil wenigstens teilweise aus ferromagnetischem Material, beispielsweise Eisen, gefertigt ist. Grundsätzlich ist natürlich auch die Verwendung von Elektromagneten zur Erzeugung der magnetischen Kraft möglich.

Um die Drehung der Probe bei der anfänglichen Justage und bei der anschließenden Durchführung von Streuversuchen möglichst gut kontrollieren zu können, kann bei der erfindungsgemäßen Präzisions-Probendrehvorrichtung vorgesehen sein, daß sie einen Kodierer zur Feststellung der Drehstellung der Drehwelle, ggf. eines die Drehwelle antreibenden Elektromotors, umfaßt. Der Einsatz derartiger Kodierer an Diffraktometern zur Erfassung der Drehstellungen von Drehwellen bzw. Elektromotoren ist bekannt und kann die Bestimmung dieser Drehstellungen mit einer Auflösung von bis zu 1 /1000 Grad erlauben.

Für die Mikrometerfinger-Antriebsvorrichtung sind verschiedene Gestaltungen möglich: In einer einfachen Ausführungsform der erfindungsgemäßen Präzisions-Probendrehvorrichtung istvorgesehen, daßdie Mikrometerfinger-Antriebsvorrichtung eine elektrisch angetriebene Linearverschiebeeinheit umfaßt. Diese Ausführungsform weist den Vorteil auf, daß die Linearverschiebeeinheit der Mikrometerfinger-Antriebsvorrichtung in der Regel leicht in die bestehende Diffraktometersteuerung integriert werden kann, da meist ohnehin weitere derartige Linearverschiebeeinheiten vorgesehen sind.

Alternativ ist es aber auch möglich, daß die Mikrometerfinger-Antriebsvorrichtung einen piezoelektrischen Kristall umfaßt. Die durch eine äußere Spannung gesteuerte Expansion bzw. Kontraktion eines piezoelektrischen Kristalls erlaubt eine sehr genaue Positionierung des Mikrometerfingers und erfordert hierzu im wesentlichen keine mechanischen, verschleißanfälligen Komponenten.

Es ist aber alternativ auch möglich, daß die Mikrometerfinger-Antriebsvorrichtung eine stromdurchflossene Spule innerhalb eines Magnetfelds umfaßt. Auch ein derartiger platzsparender Aufbau, der beispielsweise von Lautsprechern bekannt ist, erlaubt eine genaue Positionierung des Mikrometerfingers ohne Einsatz verschleißanfälliger Komponenten.

Beim erfindungsgemäß vorgesehenen Verschieben des Zentrierelements durch den orthogonal zur Drehachse positionierbaren Mikrometerfinger kann es vorkommen, daß das Zentrierelement nicht exakt zentrisch zur Bewegungsrichtung des Mikrometerfingers angeordnet ist. Die vom Mikrometerfinger bewirkte Verschiebung des Zentrierelements weist dann zusätzlich zu der eigentlich erwünschten Translation, d.h. geradlinigen Verlagerung, auch eine Drehung auf. Es kann somit vorkommen, daß die Probe auch nach dieser Verschiebung noch nicht genau zentrisch zur Drehachse angeordnet ist, was bei einer im Anschluß an diesen Justageschritt in der Regel durchgeführten Kontroll-Drehung der Drehwelle feststellbar ist, da die Probe dann wiederum auf einer Kreisbahn verläuft, deren Radius allerdings in der Regel wesentlich kleiner als der Radius der vor diesem Justageschritt beobachteten Kreisbahn ist. Um das Auftreten der genannten unerwünschten Drehung der Probe weitgehend zu vermeiden und somit die Zahl der Justageschritte zu verringern, die erforderlich sind, um die Probe zentrisch zur Drehachse zu positionieren, ist in Weiterbildung der erfindungsgemäßen Präzisions-Probendrehvorrichtung vorgesehen, daß zwischen dem Zentrierelement und dem Ende der Drehwelle eine sich im wesentlichen orthogonal zur Drehwelle erstreckende, bevorzugt runde Führungsscheibe vorgesehen ist, wobei das Ende der Drehwelle, die Führungsscheibe und das Zentrierelement Führungsmittel aufweisen, derart, daß das Zentrierelement relativ zur Führungsscheibe nur in einer ersten Richtung und die Führungsscheibe relativ zur Drehwelle nur in einer zur ersten Richtung orthogonalen zweiten Richtung verschiebbar sind. Man kann dann die aus der ersten durchlaufenen Kreisbahn der noch nicht justierten Probe abgeleitete erforderliche Verschiebung des Zentrierelements in zwei zueinander orthogonale Verschiebungen zerlegen, die bei zwei um 90° gegeneinander versetzten Drehstellung der Drehwelle durchgeführt werden, bei denen die Führungsmittel sicherstellen, daß bei einer, beispielsweise der ersten Verschiebung nur das Zentrierelement relativ zur Führungsscheibe verschoben wird und daß bei der anderen, beispielsweise der zweiten Verschiebung nur die Führungsscheibe mit dem auf ihr angeordneten Zentrierelement relativ zur Drehwelle verschoben wird.

Eine konkrete Realisierung dieser Ausführungsform kann dadurch erfolgen, daß die Führungsmittel einen drehwellenseitig und einen zentrierelementseitig an der Führungsscheibe im wesentlichen in ihrer Mitte befestigten Zapfen sowie Nuten am Ende der Drehwelle und im führungsscheibenseitigen Bereich des Zentrierelements zur Aufnahme der Zapfen umfassen, wobei die Nuten sich im montierten Zustand der Führungsmittel orthogonal zueinander und orthogonal zur Drehwelle erstrecken. Eine derartige Gestaltung bietet den Vorteil einfacher Herstellung. Bei dieser Ausführungsform ist es selbstverständlich auch möglich, die zur magnetischen Halterung erforderlichen Permanentmagneten in der Führungsscheibe vorzusehen.

Wie oben erwähnt, kann der Probenhalter mit dem Zentrierelement einstückig gebildet sein. Da an Synchrotronstrahlungsquellen aufgrund der meist nur kurzen zur Verfügung stehenden Meßzeiten beim Probenwechsel keine wertvolle "Strahlzeit" durch das Anbringen einer neuen Probe am bislang verwendeten Probenhalter verloren werden soll, sondern stattdessen in der Regel vorher mit Proben bestückte Probenhalter schnell auf das Diffraktometer aufgesetzt werden sollen, ist es aus Meßzeit- und Kostengründen vorteilhaft, wenn der Probenhalter mit dem Zentrierelement lösbar befestigt ist. Dies kann dadurch bewirkt werden, daß der Probenhalter am Zentrierelement durch Unterdruck gehalten ist, der von einer mit dem Zentrierelement verbundenen Pumpvorrichtung erzeugt ist. Ein derartiges "Ansaugen" eines mit einer Probe bestückten Probenhalters an einem Diffraktometer oder auch das Ansaugen einer Probe an einen Probenhalter ist von zahlreichen Meßplätzen für Streuversuche bekannt und erlaubt einen raschen Probenwechsel.

Zur weiteren Vereinfachung der Probenjustage kann bei einer erfindungsgemäßen Präzisions-Probendrehvorrichtung vorgesehen sein, daß sie ferner eine optische Vorrichtung zur Erfassung der Lage des Strahls und der Lage der Probe enthält, umfassend einen wahlweise am Probenort aufstellbaren Szintillator und ein auf den Probenort gerichtetes Video-Mikroskop. Die Lage des Strahls kann hierbei dadurch erfaßt werden, daß der bei noch nicht eingebauter bzw. durch das Diffraktometer weggefahrener Probe am Probenort aufgestellte Szintillator bei Einwirkung des Röntgen- bzw. Synchrotronstrahls am Auftreffpunkt des Strahls Lichtblitze aussendet. Diese Lichtblitze können mit dem auf den Probenort gerichteten Video-Mikroskop beobachtet werden und erlauben die Lokalisierung der Strahllage, beispielsweise in einem Koordinatensystem auf einem an das Video-Mikroskop angeschlossenen Bildschirm. Anschließend wird der Szintillator vom Probenort entfernt und die Probe eingebaut bzw. mit Hilfe des Diffraktometers wieder an den Probenort verlagert. Das Video-Mikroskop erleichtert dann die oben beschriebene Zentrierung der Probe bezüglich der Drehachse, indem es eine Betrachtung der von der noch nicht justierten Probe bei Drehung der Drehwelle beschriebenen Kreisbahn in Vergrößerung auf dem Bildschirm ermöglicht. Nach dieser Justage ermöglicht das Video-Mikroskop ferner ein rasches Positionieren der justierten Probe im Strahl, da es die Probe ständig auf dem Bildschirm anzeigen kann, in dessen Koordinatensystem anfangs die Strahllage eingetragen wurde.

Dieses Einbringen der justierten Probe in den Strahl kann dadurch erfolgen, daß die Drehwelle und die mit ihr verbundenen Komponenten an einem Diffraktometertisch oder einer motorisierten Kippvorrichtung befestigt sind. Derartige Diffraktometertische, die eine Mehrzahl von Linearverschiebe- und Drehvorrichtungen aufweisen können, sowie derartige motorisierte Kippvorrichtungen, bei denen in der Regel wenigstens drei ein- und ausfahrbare Teleskopbeine vorgesehen sind, sind an sich bekannt und werden hier nicht näher erläutert.

In einer vorteilhaften Weiterbildung der Erfindung ist vorgesehen, daß der Szintillator an einem motorisierten Verschiebetisch befestigt ist. Auf diese Weise kann der Szintillator in den Strahl hinein- bzw. auf diesem herausgefahren werden, ohne daß die Meßkabine hierzu betreten werden muß und dementsprechende Meßzeit verlorengeht.

In einer vorteilhaften Weiterbildung der Erfindung ist vorgesehen, daß der Szintillator mittels eines Lichtleiters mit einer Photodiode gekoppelt ist. Eine derartige Gestaltung erlaubt es, den Szintillator nicht nur zur Erzeugung der mit dem Video-Mikroskop zu beobachtenden Lichtblitze zu verwenden, sondern gleichzeitig einen Zusammenhang zwischen der von ihm erzeugten Lichtmenge und der Intensität des einfallenden Strahls auszunutzen und ihn somit zur Messung der Strahlintensität zu verwenden.

Grundsätzlich ist es möglich, das auf den Probenort gerichtete Video-Mikroskop an jeder Position aufzustellen, die die Betrachtung des Probenorts erlaubt. In einer vorteilhaften Ausführung der Erfindung ist jedoch vorgesehen, daß das Video-Mikroskop koaxial zum Strahl auf den Probenort gerichtet ist. Diese koaxial zum Strahl erfolgende Betrachtung der Probe erlaubt eine besonders problemlose und rasche Positionierung der Probe im Strahl, da in dieser Geometrie keine Parallaxenfehler auftreten. Es wird darauf hingewiesen, daß bei zum Strahl koaxialer Betrachtung der Probe bei der Justage nicht die gesamte von der Probe durchlaufene Kreisbahn, sondern im wesentlichen nur deren Projektion auf die Ebene des Objektivs des Video-Mikroskops sichtbar ist. Man sieht somit bei der koaxial zum Strahl erfolgenden Betrachtung "von der Seite" anstelle der Kreisbahn nur eine Auf- und Abbewegung der unjustierten Probe. Die Bestimmung des Radius der Kreisbahn als halber Abstand zwischen den beiden "Extremstellungen" der Probe ist hierbei problemlos möglich.

Eine derartige Aufstellung des Video-Mikroskops kann in einfacher Weise dadurch erfolgen, daß das Video-Mikroskop in Vorwärtsrichtung in Verlängerung des Strahls angeordnet ist. Hierbei wird das Video-Mikroskop zur Justage im Bereich des für die Messung verwendeten Röntgendetektors angeordnet.

In einer vorteilhaften alternativen Ausführungsform der Erfindung, bei der das Video-Mikroskop auch während der Messungen in Betrieb bleiben kann, ist vorgesehen, daß das Video-Mikroskop mit einer Orientierung von 90° gegenüber dem Strahl auf einen Spiegel gerichtet ist, der gegenüber dem Strahl unter 45° orientiert ist und von diesem durch eine im Spiegel vorgesehene Bohrung durchsetzt wird. Diese Ausführung bietet den Vorteil, daß der Spiegel beispielsweise beim Probenwechsel ggf. rasch entfernt und danach wieder eingebaut werden kann, was den Probenwechsel und sonstige Arbeiten an der erfindungsgemäßen Präzisions-Probendrehvorrichtung erleichtert.

Alternativ ist es jedoch auch möglich, daß ein Objektiv des Video-Mikroskops mit einer koaxialen Bohrung versehen ist, durch welche der Strahl vor Erreichen der Probe verläuft. Diese Gestaltung erlaubt es, das Objektiv des Video-Mikroskops sehr nah an der Probe anzuordnen, was bei besonders kleinen, schwer zu erkennenden Proben von Vorteil ist.

Eine weitere Erleichterung der Arbeit mit der erfindungsgemäßen Präzisions-Probendrehvorrichtung ist möglich, wenn das vom Video-Mikroskop erfaßte Bild zur automatischen Strahllokalisierung und Probenjustage einem Computer zugeführt ist. Es ist dann beispielsweise möglich, das vom Video-Mikroskop erfaßte Bild auf dem gleichen Computerbildschirm wie ein den Betrieb des Diffraktometers steuerndes Diffraktometer-Steuerungsprogramm anzuzeigen. Bei entsprechender Programmierung ist es sogar möglich, die Strahllokalisierung, das hierzu erforderliche Hinein- und Herausfahren des Szintillators in bzw. aus dem Strahl, das Justieren der Probe zentrisch zur Drehachse und/oder das Hineinfahren der justierten Probe in den Strahl zu automatisieren. Auf diese Weise kann die bisher meist mühsame und zeitaufwendige Justage vereinfacht und beschleunigt werden.

In Weiterbildung der erfindungsgemäßen Probendrehvorrichtung kann vorgesehen sein, daß sie weitere motorisierte Verschiebetische zum Einbringen von Beam-Stops, Strahlrohren und dgl. in den Strahl umfaßt. Die Verwendung derartiger Beam-Stops, beispielsweise in Form von Bleischeiben, zum Schützen des Detektors vor dem Strahl während der Justage sowie der Einsatz von Strahlrohren, beispielsweise in Form von an ihren Längsenden offenen Molybdänröhrchen, zur Begrenzung des durch Luftstreuung verursachten Signafuntergrunds, ist bei Röntgen- bzw. Synchrotronstreuversuchen an sich bekannt.

Zweckmäßigerweise ist bei der erfindungsgemäßen Probendrehvorrichtung vorgesehen, daß sie ferner Mittel zum Anbringen einer Probenumgebung, beispielsweise einer Kühl-, Heiz- oder Magnetisiervorrichtung, umfaßt. Im einfachsten Fall bestehen derartige Mittel zum Anbringen von Probenumgebungen aus einer regelmäßigen Anordnung von Gewindebohrungen, wie sie beispielsweise von herkömmlichen Linearverschiebe- und Drehvorrichtungen für Diffraktometer bekannt sind.

Selbstverständlich kann die erfindungsgemäße Probendrehvorrichtung eine dauerhaft stabile Position der Probe dem Strahl besser gewährleisten, wenn zusätzlich zu der oben beschriebenen Justage der Probe zentrisch zur Drehachse auch die Stabilität dieser Drehachse relativ zum Strahl sichergestellt ist. Dies erfordert eine möglichst stabile Lagerung der Drehwelle. Deswegen kann vorgesehen sein, daß die Drehwelle mit Kugellagern gelagert ist.

Es ist aber alternativ auch möglich, daß die Drehwelle mit Luftlagern gelagert ist. Bei derartigen Luftlagern ist die Drehwelle in einer zylinderförmigen Vertiefung in einem Lagergehäuse aufgenommen und wird durch Öffnungen in der Wand dieser zylinderförmigen Vertiefung derart mit Druckluft beaufschlagt, daß sie sich ohne Reibkontakt mit der Wand der Vertiefung frei drehen kann. Die Lagestabilität derart gelagerter Wellen ist in der Regel höher als die mit Kugellagern erreichbare.

Die Erfindung wird im folgenden an einem bevorzugten Ausführungsbeispiel anhand der Zeichnung erläutert. Es zeigt:
- Figur 1: eine perspektivische Ansicht einer ersten Ausführungsform der erfindungsgemäßen Präzisions-Probendrehvorrichtung mit der Probe und dem Strahl im Vordergrund,
- Figur 2: eine perspektivische Ansicht der ersten Ausführungsform gemäß Figur 1 mit der motorisierten Kippvorrichtung im Vordergrund,
- Figur 3: einen vergrößerten Ausschnitt des Probenbereichs der perspektivischen Ansicht gemäß Figur 1,

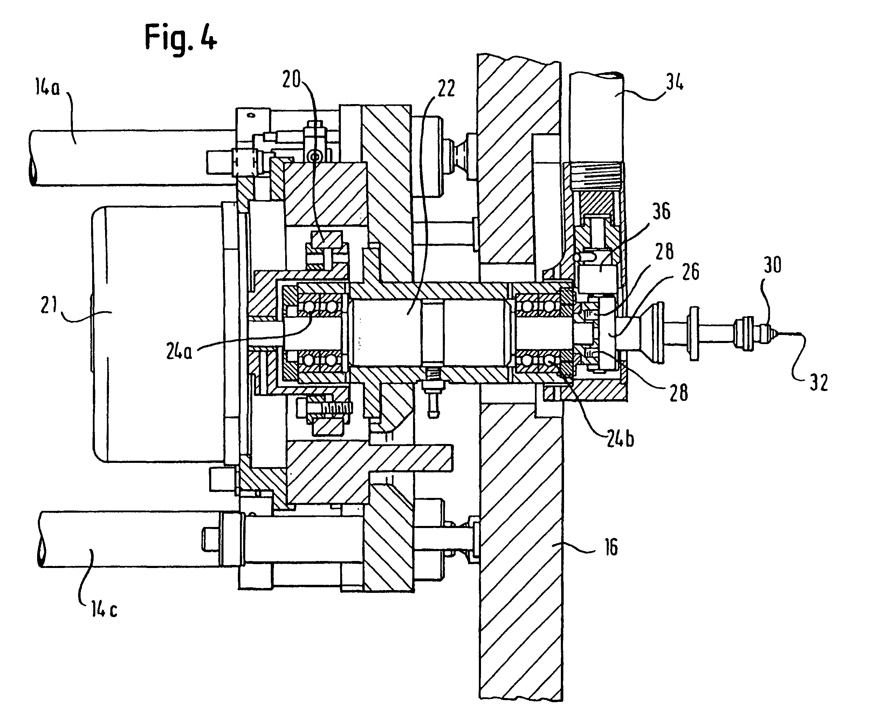

- Figur 4: eine schematische, geschnittene Seitenansicht der ersten Ausführungsform der erfindungsgemäßen Präzisions-Probendrehvorrichtung,
- Figur 5: einen schematischen, vergrößerten Ausschnitt des Bereichs des Zentrierelements und des Mikrometerfingers aus Figur 4,
- Figur 6: eine Vorderansicht des Schnitts entlang der Linie VI - VI in Figur 5,
- Figur 7: eine schematische Darstellung der in einer zweiten Ausführungsform der Erfindung zwischen dem Zentrierelement und dem Ende der Drehwelle vorgesehenen Führungsscheibe,
- Figur 8: eine schematische Darstellung der Positionierung des Video-Mikroskops in einer dritten Ausführungsform der Erfindung,
- Figur 9: eine schematische Darstellung der Positionierung des Video-Mikroskops in einer vierten Ausführungsform der Erfindung.

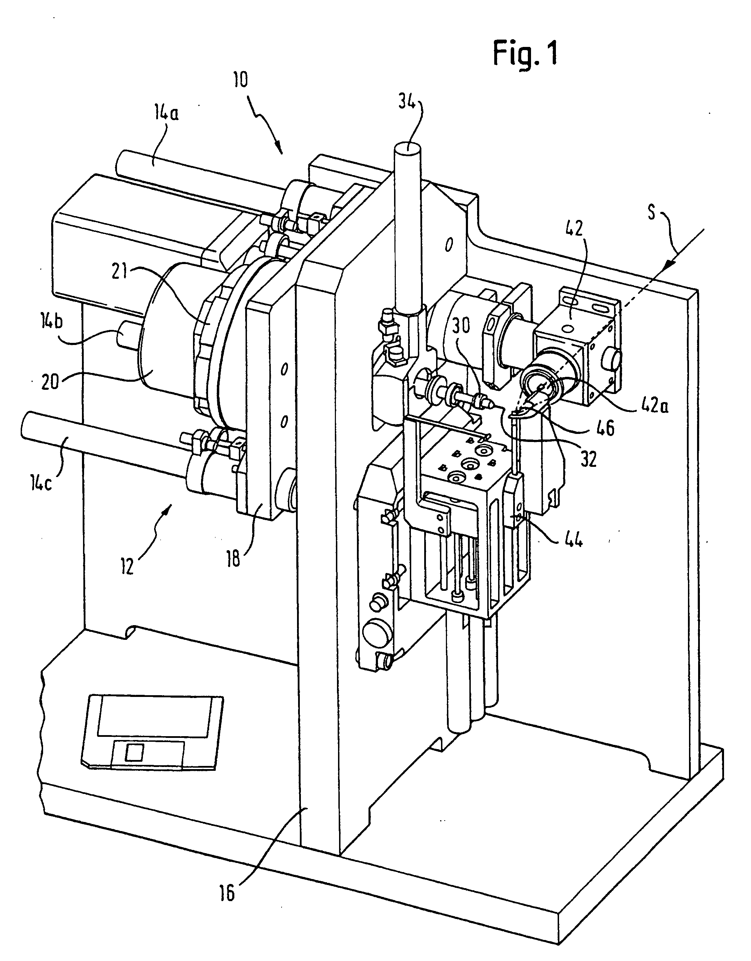

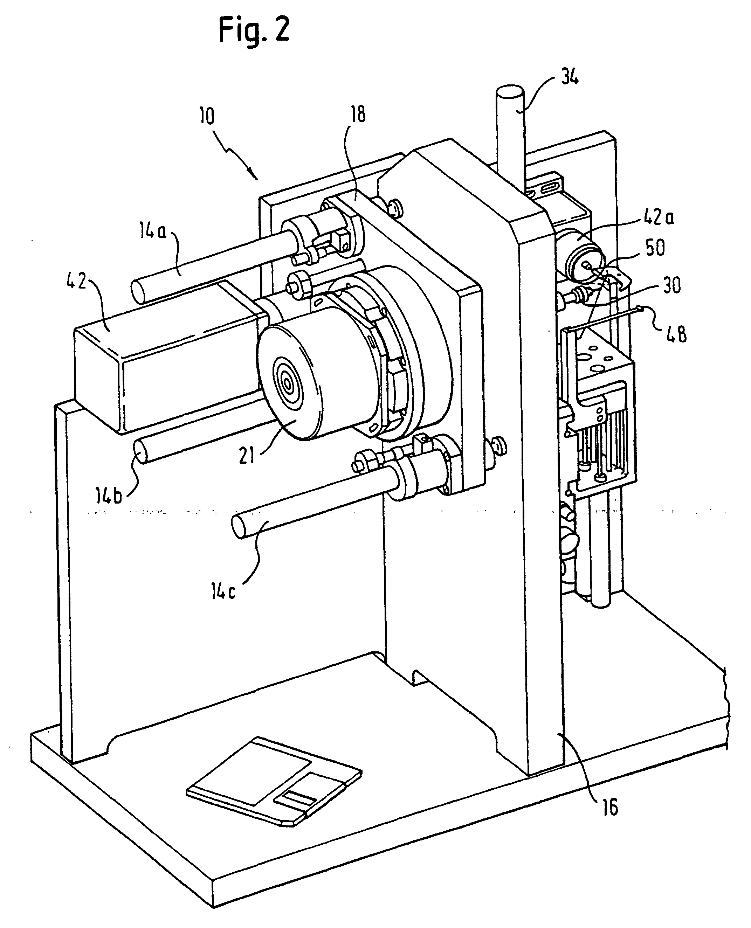

Wie man in der Gesamtansicht der Figuren 1 und 2 erkennt, umfaßt die erfindungsgemäße Präzisions-Probendrehvorrichtung 10 eine motorisierte Kippvorrichtung 12 mit motorisch ein- und ausfahrbaren Teleskopbeinen 14a, b, c. Deren freie Enden sind an einer vertikalen Halteplatte 16 befestigt, während die gegenüber diesen freien Enden motorisch, pneumatisch oder auf ähnliche Weise verschiebbaren Teleskopelemente der Teleskopbeine 14a, b, c ein Gehäuse 18 tragen. Dieses Gehäuse 18 und die mit ihm verbundenen Teile können somit durch wahlweises Ein- oder Ausfahren wenigstens eines oder mehrerer der Teleskopbeine 14a, b, c gegenüber der vertikalen Halteplatte 16 gekippt werden.

Im Gehäuse 18 ist ein Elektromotor 20 befestigt, welcher eine Drehwelle 22 antreibt, die die vertikale Halteplatte 16 durch eine in ihr vorgesehene Bohrung durchsetzt. Die Drehwelle 22 ist mit Kugellagern 24a, b gelagert. Wahlweise können anstelle der Kugellager 24a, b auch Luftlager eingesetzt werden. Ein am Gehäuse 18 befestigter Kodierer 21 erfaßt die Drehstellung des Elektromotors 20, so daß Abweichungen zwischen Soll- und Ist-Drehstellungen des Motors 20 ggf. korrigiert werden können.

An dem vom Elektromotor 20 abgewandten Ende der Drehwelle 22 ist ein Zentrierelement 26 magnetisch gehalten. Diese magnetische Halterung wird dadurch sichergestellt, daß das Zentrierelement 26 aus einem ferromagnetischen Material, beispielsweise Eisen, gefertigt ist und Permanentmagnete 28 in das Ende der Drehwelle 22 eingelassen sind. Auf diese Weise ist das Zentrierelement stabil und dennoch in der Kontaktebene zwischen der Drehwelle 22 und dem Zentrierelement 26 verschiebbar gehalten.

An dem von der Drehwelle 22 abgewandten Ende des Zentrierelements 26 ist ein Probenhalter 30 befestigt, der eine Probe 32 hält. Die Probe 32 ist hierzu beispielsweise am Probenhalter 30 angeklebt. Die Befestigung des Probenhalters 30 am Zentrierelement 26 erfolgt vorzugsweise durch Unterdruck, der von einer mit dem Zentrierelement 26 verbundenen, in den Figuren nicht gezeigten Pumpvorrichtung erzeugt wird. Diese Unterdruck-Methode zum Halten von Proben bzw. Probenhaltern ist bei Diffraktometern für Streuversuche an sich bekannt.

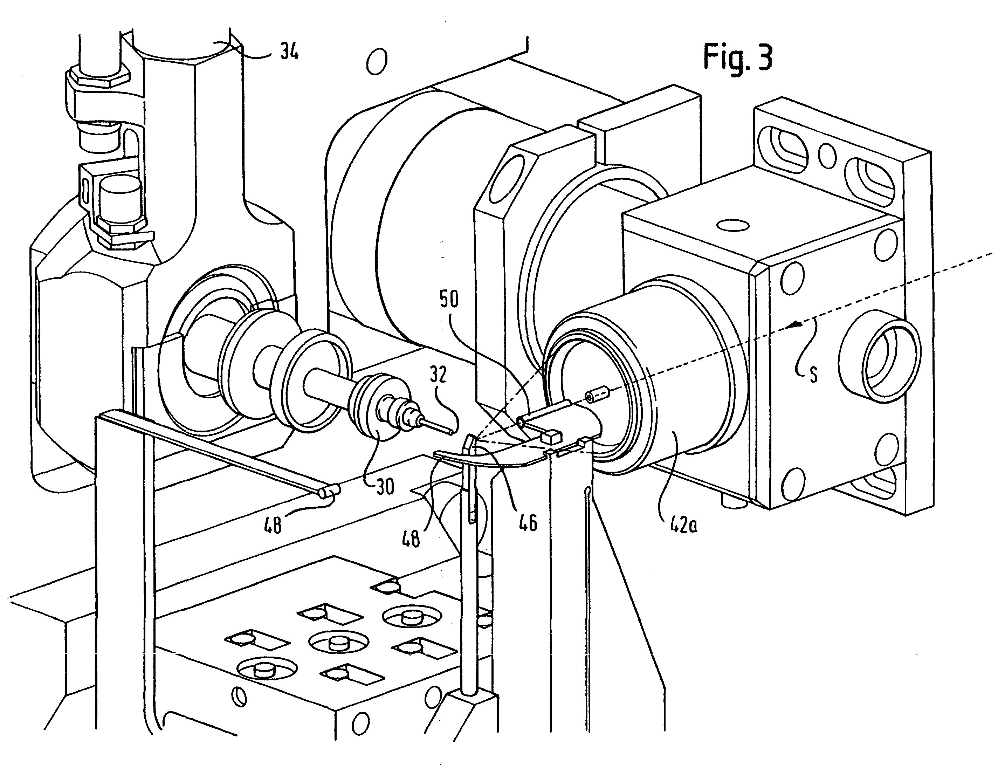

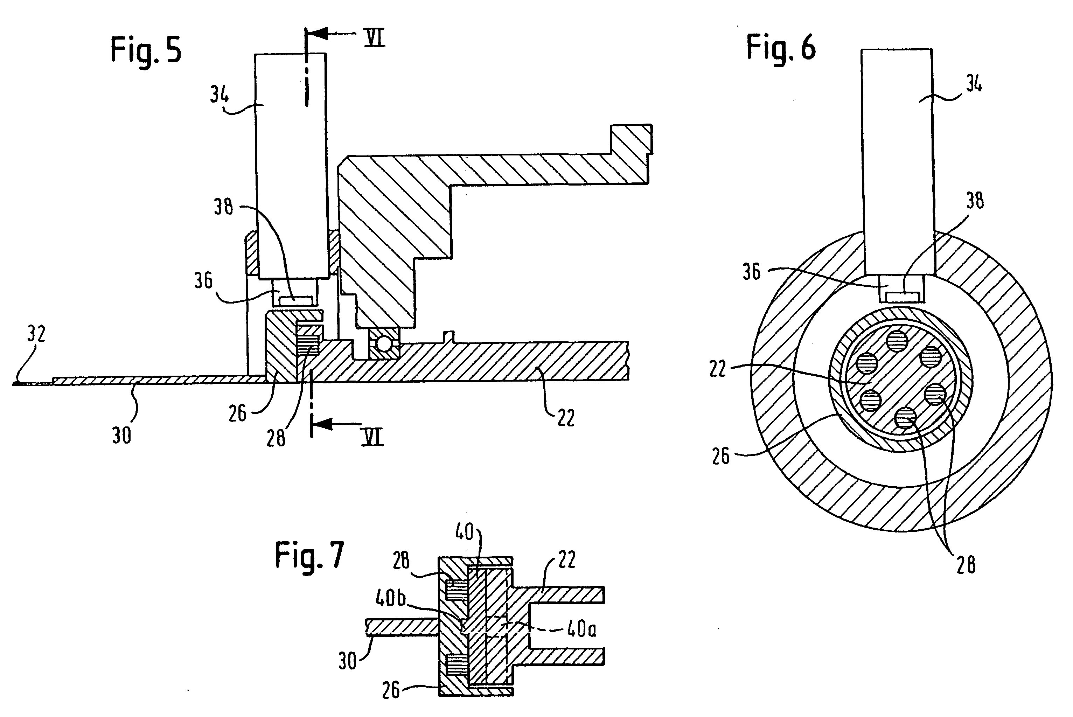

Um die Probe 32 zentrisch zur Drehachse der Drehwelle 22 in dem in den Figuren 1 und 3 durch eine gestrichelte Linie angedeuteten Röntgen- bzw. Synchrotronstrahl S justieren zu können, ist über dem Zentrierelement 26 ein in einem Führungsgehäuse 34 orthogonal zur Drehachse der Drehwelle 22 positionierbarer Mikrometerfinger 36 angeordnet. Der Mikrometerfinger 36 kann durch einen in den Figuren nicht gezeigten Antrieb, beispielsweise eine elektrisch angetriebene Linearverschiebeeinheit, einen piezoelektrischen Kristall oder eine stromdurchflossene Spule innerhalb eines Magnetfelds von oben auf das Zentrierelement 26 zu nach unten gefahren werden und nach Eintreten des Kontakts mit dem Zentrierelement 26 dieses um eine Strecke nach unten verschieben, die im wesentlichen dem Radius der von der noch nicht justierten Probe bei Drehung der Drehwelle 22 um 360° beschriebenen Kreisbahn entspricht. Um bei Annäherung des Mikrometerfingers 36 an das Zentrierelement 26 den lichten Abstand zwischen beiden Teilen erfassen zu können, ist in dem zentrierelementseitigen Ende des Mikrometerfingers 36 ein Kapazitätssensor 38 angeordnet, wie insbesondere in Fig. 5 und 6 zu erkennen ist.. Es versteht sich, daß der Mikrometerfinger 36 beispielsweise auch unter dem Zentrierelement 26 angeordnet sein kann, um dieses ggf. nach oben zu verschieben, und daß der Mikrometerfinger 36 in der in Figur 6 gezeigten Vorderansicht sogar jede beliebige angulare Stellung einnehmen kann, in der er orthogonal zur Drehachse des Motors 20 auf das Zentrierelement 26 zu und von ihm weg positionierbar ist. Gegebenenfalls können sogar mehrere derart angeordnete Mikrometerfinger 36 vorgesehen sein.

Wie man in der in Figur 6 gezeigten Vorderansicht erkennt, ist der Mikrometerfinger 36 im wesentlichen zentrisch zum Zentrierelement 26 positionierbar. Beim Verschieben des Zentrierelements 26, in Figur 6 nach unten, mit Hilfe des Mikrometerfingers 36, sollte das Zentrierelement 26 daher die gewünschte geradlinige Bewegung durchführen. Bei nicht exakt zentrischem Aufsetzen des Mikrometerfingers 36 auf dem Zentrierelement 26 kann die durchgeführte Verschiebung jedoch eine unerwünschte Drehung des Zentrierelements 26 beinhalten und die angestrebte Justage der Probe verfehlen. Aus diesem Grund ist in einer zweiten Ausführungsform der Erfindung zwischen dem Zentrierelement 26 und dem Ende der Drehwelle 22 eine sich im wesentlichen orthogonal zur Drehwelle 22 erstreckende, runde Führungsscheibe 40 vorgesehen. Wie man in Figur 7 erkennt, weist die Führungsscheibe 40 einen drehwellenseitigen und einen zentrierelementseitigen Zapfen 40a bzw. 40b auf, die jeweils in ihrer Mitte angeordnet sind. Der drehwellenseitige Zapfen 40a verläuft in einer im Ende der Drehwelle 22 gebildeten Nut, die sich in Figur 7 in der Zeichenebene erstreckt und gestrichelt angedeutet ist. Hierdurch wird sichergestellt, daß die Führungsscheibe 40 relativ zur Drehwelle 22 in Figur 7 nur nach oben oder unten verschoben werden kann. Der zentrierelementseitige Zapfen 40b ist in einer im führungsscheibenseitigen Ende des Zentrierelements 26 gebildeten Nut aufgenommen, die sich in Figur 7 orthogonal zur Zeichenebene erstreckt. Auf diese Weise ist sichergestellt, daß das Zentrierelement 26 relativ zur Führungsscheibe 40 in Figur 7 nur orthogonal zur Zeichenebene verschoben werden kann. Verwendet man den Mikrometerfinger 36 zum Verschieben des Zentrierelements 26 bei dieser Ausführungsform nur in solchen Drehstellungen der Drehwelle 22, in denen eine der beiden Nuten parallel zur Verlagerungsrichtung des Mikrometerfingers 36 orientiert ist und die andere Nut folglich orthogonal zu dieser Verlagerungsrichtung, so kann die beschriebene unerwünschte Drehung des Zentrierelements 26 beim Verschieben vermieden werden.

Wie in den Figuren 1 bis 3 zu erkennen ist, ist bei der ersten AusführungsformdererfindungsgemäßenPräzisions-ProbendrehvorrichtungdasObjektiv 42a des Video-Mikroskops 42 mit einer Bohrung versehen, durch welche der in Figur 3 gestrichelt angedeutete Strahl S verläuft. Diese Anordnung erlaubt eine Betrachtung des Probenorts koaxial zum Strahl S. In der in Figur 3 gezeigten Anordnung dient das Video-Mikroskop 42 momentan zur Erfassung der Lage des Strahls S. Hierzu ist ein an einem motorisierten Verschiebetisch 44 befestigter Szintillator 46 an den Probenort gefahren worden, nachdem die Probe 32 mit Hilfe der motorisierten Kippvorrichtung 12 von dieser Position zurückgezogen worden ist. Der vom Strahl S getroffene Szintillator 46, der beispielsweise aus Bi₄Ge₃O₁₂, aus CdWO₄ oder einem sonstigen Szintillatormaterial gefertigt sein kann, sendet dann Licht aus, welches, wie in Figur 3 durch einen schematischen Lichtkegel angedeutet ist, durch das Objektiv 42a des Video-Mikroskops 42 erfaßt wird. Dies erlaubt die Darstellung des Auftreffpunkts des Strahls S auf dem Szintillator 46 in einem Koordinatensystem auf einem an das Video-Mikroskop 42 angeschlossenen Bildschirm, insbesondere Computerbildschirm.

Zur Schonung des bei dieser Strahllageerfassung nicht benötigten Röntgendetektors können gemeinsam mit dem Szintillator 46 auch zwei Beam-Stops 48 in den Strahl S eingefahren werden. In Figur 3 ist an der Halterung des in Strahlrichtung ersten Beam-Stops 48 ferner ein an seinen Enden offenes Molybdän-Strahlröhrchen 50 befestigt, durch welches der Strahl S vor Erreichen des Szintillators 46 verläuft, um insbesondere das Objektiv 42a vor luftgestreuten Röntgen- bzw. Synchrotronstrahlen zu schützen.

Bei der in Figur 3 gezeigten Ausführungsform, bei der ein mit einer Bohrung versehenes Objektiv 42a eingesetzt wird, versteht es sich, daß strahlaufwärts von diesem Objektiv 42a ein im wesentlichen unter 45 ° gegenüber dem Strahl orientierter, mit einer Bohrung für den Strahl versehener Spiegel angeordnet ist, der das vom Objektiv 42a erfaßte Licht zum eigentlichen Kamerateil des Video-Mikroskops 42 reflektiert.

Nach der derart erfolgten Erfassung der Strahllage wird der Szintillator 46 in Figur 3 mit Hilfe seines motorisierten Verschiebetischs 44 nach unten weggefahren und die noch unjustierte Probe 32 mit Hilfe der motorisierten Kippvorrichtung 12 an die zuvor vom Szintillator 46 eingenommene Position gefahren. Bei der in Figur 3 gezeigten Anordnung des Video-Mikroskops 42 beobachtet man mit diesem bei Drehung der Drehwelle 22 um 360° die Projektion der von der Probe 32 beschriebenen Kreisbahn auf die Ebene des Objektivs 42a, d.h. man beobachtet eine Auf- und Abbewegung der Probe 32. Der Abstand zwischen dem obersten und dem untersten Punkt dieser Auf- und Abbewegung der Probe 32 entspricht dem Durchmesser der Kreisbahn. Somit erlaubt die Beobachtung der Probe 32 mit Hilfe des Video-Mikroskops 42 die Bestimmung der Strecke, um die sie gegenüber der Drehachse der Drehwelle 22 versetzt ist. Man dreht dann die Drehwelle 22 in eine Drehstellung, bei der die Probe 32 am obersten Punkt der beobachteten Auf- und Abbewegung angeordnet ist, und verschiebt das Zentrierelement 26 dann mit Hilfe des Mikrometerfingers 36 um die erforderliche Strecke, nämlich um den Radius der Kreisbahn, nach unten.

Sicherheitshalber wird man anschließend eine erneute Drehung der Drehwelle 22 um 360° durchführen und die von der Probe hierbei beschriebene Bahn beobachten und ggf. eineerneute Korrekturdurchführen. Erfahrungsgemäß konvergieren derartige iterative Justierschritte sehr schnell, so daß die justierte Probe schließlich bei Drehung der Drehwelle 22 lagestabil ist.

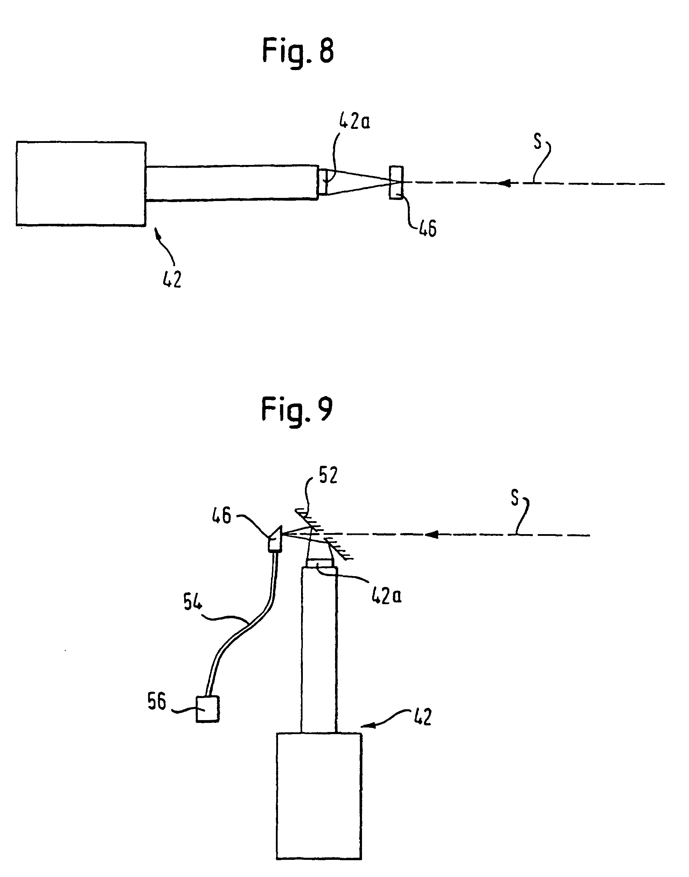

Die Figuren 8 und 9 zeigen schematisch andere Positionierungsmöglichkeiten für das Video-Mikroskop 42 in weiteren Ausführungsformen der Erfindung.

In Figur 8 ist das Video-Mikroskop 42 in direkter Verlängerung des auf den Szintillator 46 treffenden Strahls S in Vorwärtsrichtung angeordnet. Eine derartige Anordnung kann beispielsweise gewählt werden, wenn bereits existierende Diffraktometer mit einem Video-Mikroskop 42 nachgerüstet werden sollen, für das aus Platzgründen keine andere Aufstellposition gefunden werden kann. Bei der in Figur 8 dargestellten Anordnung muß das Video-Mikroskop 42 nach der Erfassung der Strahllage, der Zentrierung der Probe 32 und dem Hineinfahren der Probe 32 in den Strahl S mit Hilfe der motorisierten Kippvorrichtung 12 entfernt werden, um die von der Probe 32 erzeugten Streusignale untersuchen zu können.

Demgegenüber kann bei der in Figur 9 schematisch dargestellten Anordnung das Video-Mikroskop 42 auch während der Messungen installiert und in Betrieb bleiben. Das Video-Mikroskop 42 ist hierbei nämlich unter 90° gegenüber dem Strahl S auf einen Spiegel 52 gerichtet, welcher gegenüber dem Strahl S unter 45° orientiert ist und diesen durch eine im Spiegel 52 vorgesehene Bohrung durchläßt. Der in Figur 9 angedeutete Licht-Strahlengang verdeutlicht, daß das Video-Mikroskop 42 auch bei dieser Anordnung koaxial zum Strahl auf den Probenort gerichtet ist.

In Figur 9 ist der Szintillator 46 über einen Lichtleiter 54 mit einer Photodiode 56 oder dgl. verbunden, welche eine quantitative Überprüfung der Intensität des Strahls S erlaubt. Somit kann bereits bei der Strahllageerfassung überprüft werden, ob die strahlaufwärts angeordneten Komponenten der Meßanlage bzw. die Röntgenanlage oder das Synchrotron selbst ordnungsgemäß funktionieren.

Die beschriebene erfindungsgemäße Präzisions-Probendrehvorrichtung erlaubt allgemein die exakte Positionierung einer Probe zentrisch zu einer Drehachse. Diese Anwendung an einem Diffraktometer ist nicht auf die beispielhaft genannten Röntgen- bzw. Synchrotron-Streuversuche beschränkt, sondern kann grundsätzlich auch an Diffraktometern für Neutronen- und sonstige Streuexperimente eingesetzt werden. Hierbei versteht es sich, daß die erfindungsgemäße Präzisions-Probendrehvorrichtung 10 mit weiteren Linearverschiebe- und/oder Drehvorrichtungen kombiniert werden kann. So ist es beispielsweise möglich, den in den Figuren 1 bis 3 gezeigten Aufbau auf einem bereits existierenden Diffraktometer zu befestigen. Darüber hinaus erkennt der Fachmann auf dem Gebiet der Diffraktometer für Streuversuche zahlreiche Möglichkeiten, beschriebene Komponenten der erfindungsgemäßen Präzisisons-Probendrehvorrichtung 10 durch gleichwirkende Komponenten zu ersetzen. So kann beispielsweise die motorisierte Kippvorrichtung 12 durch eine Kombination aus einem herkömmlichen Hubtisch und mehreren herkömmlichen Eulerwiegen, d.h. eine Kombination von Linearverschiebe- und Drehvorrichtungen, ersetzt werden. Ebenso ist es möglich, das Zentrierelement 26 nicht magnetisch auf der Drehwelle 22 zu halten, sondern ähnlich der beschriebenen Halterung des Probenhalters 30 am Zentrierelement 26 durch einen vom Ende der Drehwelle 22 ausgeübten Unterdruck. Auch eine derartige Befestigung erlaubt eine Verschiebung des Zentrierelements 26 relativ zur Drehwelle 22 in der Berührungsebene dieser beiden Komponenten.

## Patentansprüche

1. Präzisions-Probendrehvorrichtung (10) an einem Diffraktometer, insbesondere für Röntgen-bzw. Synchrotronstreuversuche, umfassend:
- eine motorisch antreibbare Drehwelle (22),
- ein an einem Ende der Drehwelle (22) gehaltenes und In einer zur Drehachse der Drehwelle (22) orthogonalen Ebene verschiebbares Zentrierelement (26),
- einen an dem Zentrierelement (26) befestigten oder mit diesem einstückigen Probenhalter (30) zur Halterung einer Probe (32) im wesentlichen zentrisch zur Drehachse in einem Röntgen- bzw. Synchrotronstrahl (S),
- wenigstens einen im Bereich des Zentrierelements (26) angeordneten Mikrometerfinger (36) zur Verschiebung des Zentrierelements (26) in einer zur Drehachse der Drehwelle (22) orthogonalen Ebene, der durch eine Mikrometerfinger-Antriebsvorrichtung orthogonal zur Drehachse der Drehwelle (22) positionierbar ist.

2. Präzisions-Probendrehvorrichtung (10) nach Anspruch 1, **gekennzeichnet durch** eine Erfassungseinrichtung für den momentanen lichten Abstand, ggf. Null-Abstand, zwischen dem Mikrometerfinger (36) und dem Zentrierelement (26).

3. Präzisions-Probendrehvorrichtung (10) nach Anspruch 1 oder 2, **dadurch gekennzeichnet, daß** das Zentrierelement (26) an der Drehwelle (22) magnetisch gehalten ist.

4. Präzisions-Probendrehvorrichtung (10) nach einem der Ansprüche 1 bis 3, **dadurch gekennzeichnet, daß** sie einen Kodierer (21) zur Feststellung der Drehstellung der Drehwelle (22), ggf. eines die Drehwelle (22) antreibenden Elektromotors (20), umfaßt.

5. Präzisions-Probendrehvorrichtung (10) nach einem der Ansprüche 1 bis 4, **dadurch gekennzeichnet, daß** die Mikrometerfinger-Antriebsvorrichtung eine elektrisch angetriebene Linearverschiebeeinheit umfaßt.

6. Präzisions-Probendrehvorrichtung (10) nach einem der Ansprüche 1 bis 4, **dadurch gekennzeichnet, daß** die Mikrometerfinger-Antriebsvorrichtung einen piezoelektrischen Kristall umfaßt.

7. Präzisions-Probendrehvorrichtung (10) nach einem der Ansprüche 1 bis 4, **dadurch gekennzeichnet, daß** die Mikrometerfinger-Antriebsvorrichtung eine stromdurchflossene Spule innerhalb eines Magnetfelds umfaßt.

8. Präzisions-Probendrehvorrichtung (10) nach einem der Ansprüche 2 bis 7, **dadurch gekennzeichnet, daß** die Erfassungsvorrichtung einen an dem dem Zentrierelement (26) zugewandten Ende des Mikrometerfingers (36) angeordneten Kapazitätssensor (38) umfaßt.

9. Präzisions-Probendrehvorrichtung (10) nach einem der vorhergehenden Ansprüche, **dadurch gekennzeichnet, daß** zwischen dem Zentrierelement (26) und dem Ende der Drehwelle (22) eine sich im wesentlichen orthogonal zur Drehwelle (22) erstreckende, bevorzugt runde Führungsscheibe (40) vorgesehen ist, wobei das Ende der Drehwelle (22), die Führungsscheibe (40) und das Zentrierelement (26) Führungsmittel aufweisen, derart, daß das Zentrierelement (26) relativ zur Führungsscheibe (40) nur in einer ersten Richtung und die Führungsscheibe (40) relativ zur Drehwelle (22) nur in einer zur ersten Richtung orthogonalen zweiten Richtung verschiebbar sind.

10. Präzisions-Probendrehvorrichtung (10) nach Anspruch 9, **dadurch gekennzeichnet, daß** die Führungsmittel einen drehwellenseitig und einen zentrierelementseitig an der Führungsscheibe (40) im wesentlichen in ihrer Mitte befestigten Zapfen (40a, 40b)
sowie Nuten am Ende der Drehwelle (22) und im führungsscheibenseitigen Bereich des Zentrierelements (26) zur Aufnahme der Zapfen (40a, 40b) umfassen, wobei die Nuten sich im montierten Zustand der Führungsmittel orthogonal zueinander und orthogonal zur Drehwelle (22) erstrecken.

11. Präzisions-Probendrehvorrichtung (10) nach einem der vorhergehenden Ansprüche, **dadurch gekennzeichnet, daß** der Probenhalter (30) am Zentrierelement (26) durch Unterdruck gehalten ist, der von einer mit dem Zentrierelement (26) verbundenen Pumpvorrichtung erzeugt ist.

12. Präzisions-Probendrehvorrichtung (10) nach einem der vorhergehenden Ansprüche, **dadurch gekennzeichnet, daß** sie ferner eine optische Vorrichtung zur Erfassung der Lage des Strahls und der Lage der Probe enthält, umfassend:
- einen wahlweise am Probenort aufstellbaren Szintillator (46),
- ein auf den Probenort gerichtetes Video-Mikroskop (42).

13. Präzisions-Probendrehvorrichtung (10) nach Anspruch 12, **dadurch gekennzeichnet, daß** der Szintillator (46) an einem motorisierten Verschiebetisch (44) befestigt ist.

14. Präzisions-Probendrehvorrichtung (10) nach Anspruch 12 oder 13, **dadurch gekennzeichnet, daß** der Szintillator (46) mittels eines Lichtleiters (54) mit einer Photodiode (56) gekoppelt ist.

15. Präzisions-Probendrehvorrichtung (10) nach einem der Ansprüche 12 bis 14, **dadurch gekennzeichnet, daß** das Video-Mikroskop (42) koaxial zum Strahl (S) auf den Probenort gerichtet ist.

16. Präzisions-Probendrehvorrichtung (10) nach Anspruch 15, **dadurch gekennzeichnet, daß** das Video-Mikroskop (42) in Vorwärtsrichtung in Verlängerung des Strahls (S) angeordnet ist.

17. Präzisions-Probendrehvorrichtung (10) nach Anspruch 15, **dadurch gekennzeichnet, daß** das Video-Mikroskop (42) mit einer Orientierung von 90° gegenüber dem Strahl (S) auf einen Spiegel (52) gerichtet ist, der gegenüber dem Strahl (S) unter 45° orientiert ist und von diesem durch eine im Spiegel (52) vorgesehene Bohrung durchsetzt wird.

18. Präzisions-Probendrehvorrichtung (10) nach Anspruch 15, **dadurch gekennzeichnet, daß** ein Objektiv (42a) des Video-Mikroskops (42) mit einer koaxialen Bohrung versehen ist, durch welche der Strahl (S) vor Erreichen der Probe (32) verläuft.

19. Präzisions-Probendrehvorrichtung (10) nach einem der vorhergehenden Ansprüche, **dadurch gekennzeichnet, daß** die Drehwelle (22) und die mit ihr verbundenen Komponenten an einem Diffraktometertisch oder einer motorisierten Kippvorrichtung (12) befestigt sind.

20. Präzisions-Probendrehvorrichtung (10) nach einem der Ansprüche 12 bis 19, **dadurch gekennzeichnet, daß** das vom Video-Mikroskop (42) erfaßte Bild zur automatischen Strahllokalisierung und Probenjustage einem Computer zugeführt ist.

21. Präzisions-Probendrehvorrichtung (10) nach einem der vorhergehenden Ansprüche, **dadurch gekennzeichnet, daß** sie weitere motorisierte Verschiebetische zum Einbringen von Beam-Stops (48), Strahlrohren (50) und dgl. in den Strahl (S) umfaßt.

22. Präzisions-Probendrehvorrichtung (10) nach einem der vorhergehenden Ansprüche, **dadurch gekennzeichnet, daß** sie ferner Mittel zum Anbringen einer Probenumgebung, beispielsweise einer Kühl-, Heizoder Magnetisiervorrichtung, umfaßt.

23. Präzisions-Probendrehvorrichtung (10) nach einem der vorhergehenden Ansprüche, **dadurch gekennzeichnet, daß** die Drehwelle (22) mit Kugellagern (24a, 24b) gelagert ist.

24. Präzisions-Probendrehvorrichtung (10) nach einem der Ansprüche 1 bis 22, **dadurch gekennzeichnet, daß** die Drehwelle (22) mit Luftlagern gelagert ist.

## Claims

1. Device (10) for the precision rotation of samples on a diffractometer, especially for X-ray or synchrotron radiation diffraction experiments, comprising:
- a motor-driven rotating shaft (22),
- a centring element (26) which is held at one. end of the rotating shaft (22) and can be displaced in a plane orthogonal to the axis of rotation of the rotating shaft (22),
- a sample holder (30) which is fixed to the centring element (26) or integral with the latter for holding a sample (32) substantially centrally with respect to the axis of rotation in an X-ray or synchrotron radiation beam (S),
- at least one micrometer finger (36) for displacing the centring element (26) in a plane orthogonal to the axis of rotation of the rotating shaft (22), which finger is arranged in the region of the centring element (26) and can be positioned orthogonally with respect to the axis of rotation of the rotating shaft (22) by means of a micrometer finger drive device.

2. The device (10) for the precision rotation of samples as claimed in Claim 1, **characterized by** a device for detecting the instantaneous clear distance, or possibly zero distance, between the micrometer finger (36) and the centring element (26).

3. The device (10) for the precision rotation of samples as claimed in Claim 1 or 2, **characterized in that** the centring element (26) is held magnetically on the rotating shaft (22).

4. Device (10) for the precision rotation of samples according to one of Claims 1 to 3, **characterized in that** it comprises an encoder (21) for determining the rotational position of the rotating shaft (22), possibly an electric motor (20) driving the rotating shaft (22).

5. Device (10) for the precision rotation of samples according to one of Claims 1 to 4, **characterized in that** the micrometer finger drive device comprises an electrically driven linear displacement unit.

6. Device (10) for the precision rotation of samples according to one of Claims 1 to 4, **characterized in that** the micrometer finger drive device comprises a piezoelectric crystal.

7. Device (10) for the precision rotation of samples according to one of Claims 1 to 4, **characterized in that** the micrometer finger drive device comprises a coil through which current flows within a magnetic field.

8. Device (10) for the precision rotation of samples according to one of Claims 2 to 7, **characterized in that** the detection device comprises a capacitance sensor (38) arranged at the end of the micrometer finger (36) facing the centring element (26).

9. Device (10) for the precision rotation of samples according to one of the preceding claims, **characterized in that** between the centring element (26) and the end of the rotating shaft (22) there is provided a guide disc (40), preferably a round guide disc, which extends substantially orthogonally with respect to the rotating shaft (22), the end of the rotating shaft (22), the guide disc (40) and the centring element (26) having guide means such that the centring element (26) can be displaced with respect to the guide disc (40) only in a first direction, and the guide disc (40) can be displaced with respect to the rotating shaft (22) only in a second direction orthogonal to the first direction.

10. Device (10) for the precision rotation of samples according to Claim 9, **characterized in that** the guide means comprise pins (40a, 40b) fixed to the guide disc (40) on the rotating shaft side and on the centring element side and substantially at the centre of said disc, and also grooves, at the end of the rotating shaft (22) and in the region of the centring element (26) on the guide disc side, to accommodate the pins (40a, 40b), the grooves extending orthogonally with respect to each other and orthogonally with respect to the rotating shaft (22) when the guide means are fitted.

11. Device (10) for the precision rotation of samples according to one of the preceding claims, **characterized in that** the sample holder (30) is held on the centring element (26) by vacuum, which is generated by a pump device connected to the centring element (26).

12. Device (10) for the precision rotation of samples according to one of the preceding claims,
**characterized in that** it also contains an optical device for detecting the position of the beam and the position of the sample, comprising:
- a scintillator (46) that can optionally be set up at the sample location,
- a video microscope (42) aimed at the sample location.

13. Device (10) for the precision rotation of samples according to Claim 12, **characterized in that** the scintillator (46) is fixed to a motorized displacement table (44).

14. Device (10) for the precision rotation of samples according to Claim 12 or 13, **characterized in that** the scintillator (46) is coupled to a photodiode (56) by means of an optical waveguide (54).

15. Device (10) for the precision rotation of samples according to one of Claims 12 to 14, **characterized in that** the video microscope (42) is aimed at the sample location coaxially with respect to the beam (S).

16. Device (10) for the precision rotation of samples according to Claim 15, **characterized in that** the video microscope (42) is arranged in the forward direction in extension of the beam (S).

17. Device (10) for the precision rotation of samples according to Claim 15, **characterized in that** the video microscope (42) is aimed, with an orientation of 90° with respect to the beam (S), at a mirror (52) which is oriented at 45° with respect to the beam (S) and is penetrated by the latter through a hole provided in the mirror (52).

18. Device (10) for the precision rotation of samples according to Claim 15, **characterized in that** an objective (42a) of the video microscope (42) is provided with a coaxial hole, through which the beam (S) runs before reaching the sample (32).

19. Device (10) for the precision rotation of samples according to one of the preceding claims, **characterized in that** the rotating shaft (22) and the components connected thereto are fixed to a diffractometer table or a motorized tilting device (12).

20. Device (10) for the precision rotation of samples according to one of claims 12 to 19, **characterized in that** the image registered by the video microscope (42) is fed to a computer for automatic beam localization and sample adjustment.

21. Device (10) for the precision rotation of samples according to one of the preceding claims, **characterized in that** it comprises further motorized displacement tables for the introduction of beam stops (48), beam tubes (50) and the like into the beam (S).

22. Device (10) for the precision rotation of samples according to one of the preceding claims, **characterized in that** it also comprises means for attaching a sample surround, for example a cooling, heating or magnetizing device.

23. Device (10) for the precision rotation of samples according to one of the preceding claims, **characterized in that** the rotating shaft (22) is mounted using ball bearings (24a, 24b).

24. device (10) for the precision rotation of samples according to one of Claims 1 to 22, **characterized in that** the rotating shaft (22) is mounted using air bearings.

## Revendications

1. Dispositif de rotation de précision pour échantillons (10) sur un diffractomètre, en particulier pour des essais de diffusion par rayons X ou synchrotron, comprenant :
- un arbre de rotation (22) actionnable par un moteur,
- un élément de centrage (26), qui est maintenu contre une extrémité d'un arbre de rotation (22), et qui est mobile dans le plan orthogonal par rapport à l'axe de rotation de l'arbre de rotation (22),
- un porte-échantillon (30), qui est fixé contre l'élément de centrage (26) ou réalisé d'un seul tenant avec celui-ci, et est destiné à maintenir un échantillon (32) sensiblement centré par rapport à l'axe de rotation dans un rayon X ou un rayon de synchrotron (S),
- au moins un doigt micrométrique (36) de déplacement de l'élément de centrage (26) dans un plan perpendiculaire à l'axe de rotation de l'arbre de rotation (22), qui est agencé dans la zone de l'élément de centrage (26) et qui peut être positionné orthogonalement à l'axe de rotation de l'arbre de rotation (22) par l'intermédiaire d'un dispositif d'entraînement du doigt micrométrique.

2. Dispositif de rotation de précision pour échantillons (10) selon la revendication 1, **caractérisé par** un détecteur de l'écartement momentané, le cas échéant un écartement zéro, entre le doigt micrométrique (36) et l'élément de centrage (26).

3. Dispositif de rotation de précision pour échantillons (10) selon la revendication 1 ou 2, **caractérisé en ce que** l'élément de centrage (26) est maintenu par voie magnétique contre l'arbre de rotation (22).

4. Dispositif de rotation de précision pour échantillons (10) selon l'une quelconque des revendications 1 à 3, **caractérisé en ce qu'**il comporte un codeur (21) destiné à détecter la position de rotation de l'arbre de rotation (22), le cas échéant d'un moteur électrique (20) actionnant l'arbre de rotation (22).

5. Dispositif de rotation de précision pour échantillons (10) selon l'une quelconque des revendications 1 à 4, **caractérisé en ce que** le dispositif d'entraînement du doigt micrométrique comporte une unité de déplacement linéaire actionnée électriquement.

6. Dispositif de rotation de précision pour échantillons (10) selon l'une quelconque des revendications 1 à 4, **caractérisé en ce que** le dispositif d'entraînement du doigt micrométrique comporte un cristal piézoélectrique.

7. Dispositif de rotation de précision pour échantillons (10) selon l'une quelconque des revendications 1 à 4, **caractérisé en ce que** le dispositif d'entraînement du doigt micrométrique comporte une bobine traversée par un courant à l'intérieur d'un champ magnétique.

8. Dispositif de rotation de précision pour échantillons (10) selon l'une quelconque des revendications 2 à 7, **caractérisé en ce que** le détecteur comporte un capteur de capacité (38) agencé au niveau du doigt micrométrique (36), sur son extrémité orientée vers l'élément de centrage (26).

9. Dispositif de rotation de précision pour échantillons (10) selon l'une quelconque des revendications précédentes, **caractérisé en ce qu'**il est prévu, entre l'élément de centrage (26) et l'extrémité de l'arbre de rotation (22), une platine de guidage (40), de préférence ronde, orientée sensiblement orthogonalement à l'arbre de rotation (22), l'extrémité de l'arbre de rotation (22), la platine de guidage (40) et l'élément de centrage (26) étant munis d'éléments de guidage de telle sorte que l'élément de centrage (26) est mobile par rapport à la platine de guidage (40) uniquement dans une première direction et la platine de guidage (40) est mobile par rapport à l'arbre de rotation (22) uniquement dans une deuxième direction orthogonale à la première direction.

10. Dispositif de rotation de précision pour échantillons (10) selon la revendication 9, **caractérisé en ce que** les moyens de guidage comportent des tétons (40a, 40b) fixés respectivement l'un du côté de l'arbre de rotation et l'autre du côté de l'élément de centrage contre la platine de guidage (40) sensiblement au milieu de celle-ci, ainsi que des rainures à l'extrémité de l'arbre de rotation (22) et sur l'élément de centrage (26), dans la zone du côté de la platine de guidage, destinées à recevoir les tétons (40a, 40b), les rainures étant orientées à l'état monté des moyens de guidage orthogonalement l'une à l'autre et orthogonalement à l'arbre de rotation (22).

11. Dispositif de rotation de précision pour échantillons (10) selon l'une quelconque des revendications précédentes, **caractérisé en ce que** le porte-échantillon (30) est maintenu contre l'élément de centrage (26) par une dépression qui est générée par un dispositif à pompe relié à l'élément de centrage (26).

12. Dispositif de rotation de précision pour échantillons (10) selon l'une quelconque des revendications précédentes, **caractérisé en ce qu'**il comporte en outre un dispositif optique destiné à détecter la position du rayon et la position de l'échantillon, comprenant :
- un scintillateur (46) pouvant être monté au choix sur le lieu d'essai,
- un microscope vidéo (42) dirigé vers le lieu d'essai.

13. Dispositif de rotation de précision pour échantillons (10) selon la revendication 12, **caractérisé en ce que** le scintillateur (46) est fixé contre une table mobile (44) motorisée.

14. Dispositif de rotation de précision pour échantillons (10) selon la revendication 12 ou 13, **caractérisé en ce que** le scintillateur (46) est couplé à une diode photoélectrique (56) au moyen d'un câble à fibres optiques (54).

15. Dispositif de rotation de précision pour échantillons (10) selon l'une quelconque des revendications 12 à 14, **caractérisé en ce que** le microscope vidéo (42) est dirigé sur le lieu d'essai coaxialement au rayon (S).

16. Dispositif de rotation de précision pour échantillons (10) selon la revendication 15, **caractérisé en ce que** le microscope vidéo (42) est agencé en direction vers l'avant dans le prolongement du rayon (S).

17. Dispositif de rotation de précision pour échantillons (10) selon la revendication 15, **caractérisé en ce que** le microscope vidéo (42) est dirigé vers un miroir (52) avec une orientation de 90° par rapport au rayon (S), lequel miroir est orienté à 45° par rapport au rayon (S) et est traversé par celui-ci à travers une forure prévue dans le miroir (52).

18. Dispositif de rotation de précision pour échantillons (10) selon la revendication 15, **caractérisé en ce qu'**un objectif (42a) du microscope vidéo (42) est muni d'une forure coaxiale à travers laquelle passe le rayon (S) avant d'atteindre l'échantillon (32).

19. Dispositif de rotation de précision pour échantillons (10) selon l'une quelconque des revendications précédentes, **caractérisé en ce que** l'arbre de rotation (22) et les composants assemblés à celui-ci sont fixés contre une table du diffractomètre ou un dispositif de basculement (12) motorisé.

20. Dispositif de rotation de précision pour échantillons (10) selon l'une quelconque des revendications 12 à 19, **caractérisé en ce que** l'image captée par le microscope vidéo (42) est transmise à un ordinateur pour la localisation automatique du rayon et l'ajustage automatique du capteur.

21. Dispositif de rotation de précision pour échantillons (10) selon l'une quelconque des revendications précédentes, **caractérisé en ce qu'**il comporte d'autres tablés mobiles motorisées destinées à introduire des dispositifs de blocage des faisceaux (48), des tubes radiants (50) et éléments similaires dans le rayon (S).

22. Dispositif de rotation de précision pour échantillons (10) selon l'une quelconque des revendications précédentes, **caractérisé en ce qu'**il comporte en outre des moyens pour la fixation d'un environnement d'échantillon, par exemple un dispositif de refroidissement, de chauffage ou de magnétisation.

23. Dispositif de rotation de précision pour échantillons (10) selon l'une quelconque des revendications précédentes, **caractérisé en ce que** l'arbre de rotation (22) est monté sur des roulements à billes (24a, 24b).

24. Dispositif de rotation de précision pour échantillons (10) selon l'une quelconque des revendications 1 à 22, **caractérisé en ce que** l'arbre de rotation (22) est monté sur coussinets d'air.
